# EUROPEAN PATENT SPECIFICATION

(11) **EP 3 318 136 B1**
(45) Date of publication and mention of the grant of the patent: **31.12.2025**
(21) Application number: 17201645.3
(22) Date of filing: 27.04.2010
(51) Int. Cl.: A23L 7/187, A23L 11/00, A23P 30/36, A23L 5/10

(54) **METHOD FOR PREPARING PUFFED CAKES USING A ROTARY COOKER**
VERFAHREN ZUR HERSTELLUNG VON GEPUFFTEN KUCHEN MIT EINER DREHBAREN KOCHVORRICHTUNG
PROCÉDÉ POUR PRÉPARER DES GÂTEAUX SOUFFLÉS À L'AIDE D'UN CUISEUR ROTATIF

(30) Priority: 11.05.2009 US 463673
(43) Date of publication of application: 09.05.2018
(62) Divisional of application: 10716231.5
(73) Proprietor: The Quaker Oats Company, Chicago, IL 60607 (US)
(72) Inventor: MOORE, Gary, McHenry, IL Illinois 60050 (US); KHAN, Norman, Carol Stream, IL Illinois 60188 (US); YACU, Waleed, Vernon Hills, IL Illinois 60061 (US)
(74) Representative: Harris, Oliver John Richard

(56) References cited:
- CN-A- 1 173 297
- CN-A- 101 190 005
- GB-A- 491 571
- GB-A- 663 232
- JP-A- H05 192 083
- US-A- 3 650 763
- US-A- 5 240 728
- US-A1- 2003 008 049
- US-A1- 2005 025 867
- US-A1- 2005 153 045
- DATABASE GNPD [online] MINTEL; July 2007 (2007-07-01), ANONYMOUS: "Gold pea snacks", XP002777935, Database accession no. 743635
- DATABASE GNPD [online] MINTEL; 24 March 2009 (2009-03-24), ANONYMOUS: "Soybean & Mochi Rice Snack", XP055638746, retrieved from www.gnpd.com Database accession no. 1079337

## Description

### FIELD OF THE INVENTION

The present invention relates generally to the preparation of puffed cakes. More particularly, the present invention relates to a method for preparing a puffed whole grain and legume cake with a natural appearance, using a rotary cooker.

### BACKGROUND

In today's society, obesity, high cholesterol, and high blood pressure are health concerns on the minds of the vast majority of consumers. As a result of these health concerns, there exists a need for food and beverage manufacturers to provide consumers with healthy meal and snack options. One food group in particular, whole grains, may be consumed to address these concerns. Studies have found the following health benefits may be associated with the consumption of whole grains: reducing the risk of heart disease by decreasing cholesterol levels, blood pressure and blood coagulation; reducing the risk of many types of cancer; regulating blood glucose in diabetic individuals; and experiencing staying "fuller" for a longer period of time after consuming a comestible (i.e., satiety). Legumes provide similar health benefits to whole grains. For instance, legumes are a good source of both soluble and insoluble fiber and may lower the risk of heart disease. Moreover, legumes are rich in folic acid, copper, iron and magnesium in addition to being high in protein. The present disclosure relates to a healthy snack option-a puffed whole grain and legume cake.

Products that have a natural, simple appearance are also becoming more important to consumers. Currently, whole grains and legumes are added to rice cakes at very low levels (less than 15%) because the addition of higher levels of these ingredients reduces puffing and creates a dense, unappealing rice cake. One method used in the food industry to overcome the puffing problems caused by using higher levels of grains or legumes, include pre-gelatinizing the starch component of the ingredient in an extruder. However, the extruder plasticizes the grains or legumes and destroys the non-homogeneity of the components (i.e., the grain or legume). Therefore, a need exists in the food industry for a method of providing a consumer with a whole grain or legume snack that contains higher levels of grains or legumes compared to traditional cakes, while maintaining the cake's non-homogenous appearance.

GB663232 discloses the production of ready-to-eat food product of the breakfast cereal type by rolling an admixture of at least two different cooked coarse particles of the class cereals and legumes at least one of which is a cereal, to generally coherent ribbon form to blend and amalgamate the cooked particles, kneading the rolled material with added moisture to form a plastic mass, shaping the mass to particles, drying and thereafter gun-puffing them.

US2003/008049 discloses a storage stable buoyant waxy grain wherein the waxy grain is waxy triticale and waxy wheat.

US5,240,728 discloses a process for the preparation of a foodstuff for human use comprising: selecting hard wheat grains according to their size, preheating the selected grains, moistening the preheated grains, keeping the moistened grains at rest for a period of time, cooking the grains, drying and cooling the cooked grains, hulling the grains, expanding the hulled grains, reconditioning the expanded grains to their initial water content, and recovering the reconditioned grains in view of their domestic use as foodstuff.

The method described herein provides for gelatinization of the whole grain and legume, without destroying the non-homogeneity of the whole grain or legume, thereby producing a natural-looking cake that is more appealing to consumers. The present disclosure is directed towards satisfying the need that exists in the field for natural-appearing puffed cakes. Moreover, the disclosed method prepares a puffed cake in less time and with lower drying costs as compared to traditional methods of producing a puffed cake. Additionally, by including oats or lentils in the disclosed method, the nutritional value of the cake is greater in comparison to a rice cake, thereby providing the consumer with a healthier snack alternative.

Currently, rice cakes are made by popping raw grains, by pre-steaming the grains to moisten and partially gelatinize the starch and subsequently popping, or by pre-cooking whole grain flours in an extruder and forming pellets that are subsequently popped. While rice cakes from raw or steamed rice puff well in a rice cake machine, other whole grains, such as oats, do not. When an extruder is used to fully gelatinize whole grains, the plasticization of the grains destroys the non-homogeneity of the whole grain components. Therefore, while extruded whole grains will puff well in a rice cake machine, the finished product has a homogeneous, non-natural, unappealing appearance. The disclosed method provides greater gelatinization of starches than steaming alone and a similar level of starch gelatinization as extrusion, without destroying the non-homogeneity of the whole grain.

The method of preparing puffed cakes, as described herein, is advantageous in that it provides a more appealing product than can be produced by traditional methods of preparing puffed cakes. Additionally, this method of preparing puffed cakes allows the manufacturer to operate its rice cake popping machines at shorter bake times thereby lowering costs and improving popping productivity by 10-20% over conventionally steamed grains. This method of preparing cakes also provides longer product shelf-life. The method of preparing cakes as described herein can be completed by introducing legumes into a first rotary cooker, cooking and drying the legumes; introducing at least one whole grain into a second rotary cooker, cooking and drying the at least one whole grains; blending the cooked and dried legumes with the cooked and dried whole grain(s), and puffing the product.

The present invention is directed toward satisfying the need that exists in the field, for healthy, natural, and natural-appearing snack products. Additionally, a food-grade ingredient may be included in the method of preparing the cakes, thereby providing the consumer with additional options for a healthy snack.

### SUMMARY OF THE INVENTION

The present invention provides a method according to appended claim 1. Optional features are set out in the dependent claims.

### BRIEF DESCRIPTION OF THE DRAWINGS

Numerous objects, features and advantages of the present invention will be apparent based upon the following description of the drawings.
FIG. 1 is an RVA graph depicting the starch character in raw, steamed and rotary cooked Chana lentils.
FIG. 2 is an RVA graph depicting the starch character in raw, steamed and rotary cooked Masoor (Red Chief) lentils.

### DETAILED DESCRIPTION

The present disclosure relates to legume cakes. In particular, the present disclosure relates to a method for preparing a puffed whole grain and legume cake. As used herein, "puffed," "puffing," or "puff' means puffing, popping, or otherwise expanding the grain or legume.

According to the present disclosure, at least one whole grain is introduced into a first rotary cooker. The grains are cooked using steam and water in the rotary cooker for a cycle time of about 30-90 minutes, which includes reaching a cooking temperature and pressure of about 121.11° C to about 137.78° C (about 250°-280° F) and 103 kPa to 172 kPa (about 15-25 psi), respectively. The rotary cooker is typically operated at about 1-5 rpm. The grain is cooked at the target temperature and pressure for about 15-60 minutes. The grains are cooked in the rotary cooker to about 20-50% moisture. Any food-grade rotary cooker may be used, such as the Lauhoff Model LC 91 Serial 9307. Following cooking, the grains are dried to about 13-17% moisture, generally for about 45-120 minutes. Techniques that may be used to dry the grains may include, but are not limited to convection overt drying at about 76.7° C to 104.4 ° C (about 170°-220° F) for about 45-120 minutes.

If the rotary cooked grains are to be stored for more than about 1 week prior to puffing, it is recommended that the grains be dried to reduce the water activity to less than about 0.6 prior to storage to prevent mold or bacterial contamination during storage. It is also recommended that the stored rotary cooked grains be soaked or steamed to about 13-17% moisture prior to puffing in accordance with the method described above.

Although the grains used in accordance with the present disclosure do not need to be fully gelatinized for puffing, certain grains such as oat and barley require further gelatinization than the gelatinization achievable using traditional steaming methods, thus necessitating the rotary cook method as described herein. It was also discovered that the degree of grain gelatinization in the cooker affects the degree of grain fusion (bond strength) when puffed. This discovery allows the manufacturer to maintain some level of control over the texture of the puffed grain cake. For instance, partially-gelatinized oats puffed into a cake results in poor fusion of the oats (causing the cake to break apart easily when bitten and chewed), whereas fully-gelatinized grains fuse well and provide a superior eating experience for the consumer.

According to the present disclosure, legumes are introduced into a second rotary cooker. The legumes are cooked using steam and water in the rotary cooker to about 20-45% moisture. The legumes are rotary cooked for a cycle time of about 20-60 minutes, which includes reaching a target temperature and pressure of about 115.56° C to 126.67° C (about 240°-260° F) and 69 kPa to 138 kPa (10-20 psi) respectively, for about 5-25 minutes. Any food-grade rotary cooker may be used in accordance with the present invention, such as the Lauhoff Model LC 91 Serial 9307. The rotary cooker is typically operated at about 2-10 rpm, for example 6 rpm. Following cooking, the legumes are dried to about 10-17% moisture, generally for about 40-100 minutes. Techniques that may be used to dry the legumes may include, but are not limited to convection oven drying at about 76.7° C to 104.4° C (about 170°-220° F) for about 40-100 minutes.

If the rotary cooked legumes are to be stored for more than about 1 week prior to puffing, it is recommended that the legumes be dried to reduce the water activity to less than about 0.6 prior to storage to prevent mold or bacterial contamination during storage. It is also recommended that the stored rotary cooked legumes be soaked or steamed to about 13-18% moisture prior to puffing in accordance with the method described above.

Although the legumes used in accordance with the instant invention do not need to be fully gelatinized for puffing, the starch in the legume requires further gelatinization than the gelatinization achievable using traditional steaming methods, thus necessitating the rotary cook method as set forth herein. The inventors also discovered that the degree of starch gelatinization in the legume in the cooking step of the present invention affects on the degree of legume fusion (bond strength) when puffed and the extent of puffing achievable.

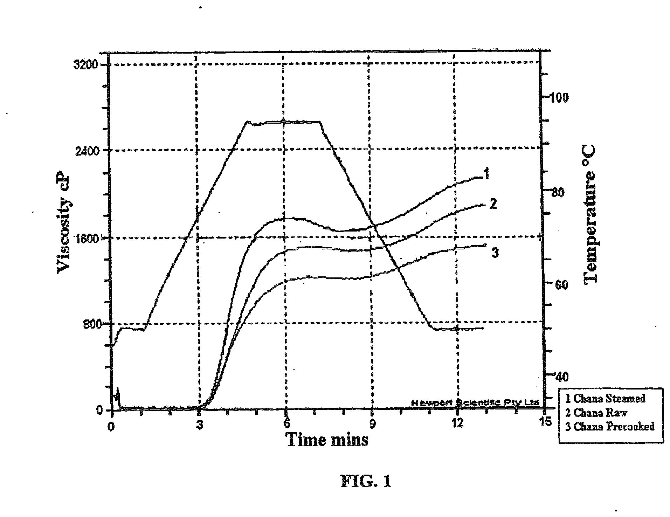

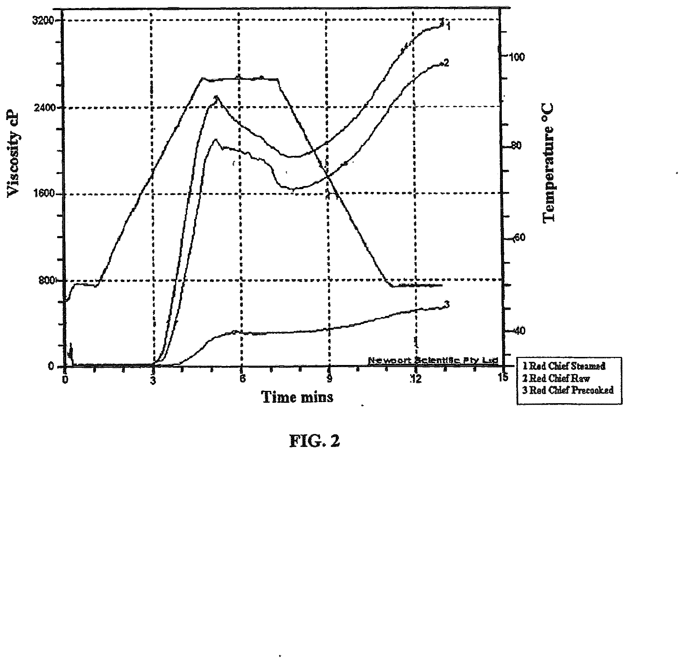

Significant differences in the starch character between raw lentils, steamed lentils and rotary cooked lentils prepared in accordance with the present disclosure were also discovered. These differences are further illustrated in FIGS. 1 and 2.

Further testing also showed that the gelatinization of the starch in the precooked (rotary cooked) lentils is superior to the starch gelatinization achieved via conventional cooking methods (See Table 1 below). For instance, traditional steaming of lentils resulted in about 21-27% starch gelatinization, which is not sufficient for acceptable puffing of the lentil. However, using the rotary cooking method described herein, starch gelatinization reached about 50-62%, thereby providing for superior puffing of the lentils.

**Table 1. Starch Gelatinization in Lentils**

| **Analytical** ID | **Sample Description** | **%Moisture** | **%Starch** | **Starch Gelatinization** (Jig) | **% Gelatinization** |
|---|---|---|---|---|---|
| 2009030482 | Red Chief Lentil -- Raw | 8.00 | 26.47 | 8.955 | - |
| 2009030483 | Red Chief Lentil -- Steamed | 17.43 | - | 7.105 | 20.66 |
| 2009030484 | Red Chief Lentil -- Precooked | 11.46 | - | 4.510 | 49.64 |
| 2009030485 | Chana Lentil -- Raw | 7.94 | 26.62 | 25.240 | - |
| 2009030486 | Chana Lentil -- Steamed | 16.34 | - | 18.300 | 27.50 |
| 2009030487 | Chana Lentil- Precooked | 13.29 | - | 9.484 | 62.43 |

In the present disclosure, both precooked legumes and precooked whole grains are introduced together in the puffing mold to make a unique puffed cake of legumes and grains fused together. The precooked legumes and grains are prepared individually as previously described and subsequently blended together just prior to being puffed, or more preferably just prior to the rehydration step. Lastly, the grain-legume mixture is puffed and fused into cake form. In one embodiment, the grain-legume mixture may be puffed using traditional rice cake popping machines. For example, the Lite Energy Rice Cake Machine may be used to puff the cakes, at a temperature range of about 204.4° C to 260° C (about 400°-500° F), and a bake time of about 1-5 or 2-5 seconds at a mold pressure of about 4.14 MPa to 7.58 MPa (600-1100 psi). As one of ordinary skill in the art of the food sciences would appreciate, the cooking conditions vary depending on the constituents of the cake (for example lower cook times are needed for grains such as rice, corn, and wheat, whereas barley and oats require longer cook times for favorable gelatinization; conditions may vary depending on the legume and its corresponding starch content).

The whole grains used in accordance with the present invention include, but are not limited to oats, wheat, rice, corn, rye, and barley or combinations of these grains. Moreover, these grains may be steel cut whole grains and rolled grains. Grains with various textures also may be used in accordance with the instant invention. In one aspect, non-waxy grains are used.

The legumes used in accordance with the present include, but are not limited to lentils, peas, chickpeas, soybeans, pinto beans, navy, beans, black beans or combinations of these legumes. Furthermore, the lentils may be selected from the group consisting of one or more of the following: Moong Dal, Urad Dal, Chana Dal, or Masoor.

The inventors also discovered that when only legumes are puffed in the puffing machine, the resulting puffed cake exhibits reduced expansion due to the low level of starch in the legume, forming a thin, crispy cake. However, when legumes are mixed with grains such as rice, the starch content is increased and the puffed cake will exhibit a greater amount of puffing resulting from a lower density due to its foam-like structure.

The puffed cakes prepared using the method described have increased durability as compared to puffed cakes prepared using traditional methods known in the food industry. By pre-cooking the whole grains and legumes in a rotary cooker, the grains and legumes also exhibit improved fusion. Notable advantages associated with improved fusion and durability of the grains and legumes include easier consumption of the puffed cake with less mess, and less concern regarding breakage of the cakes during transportation and/or storage.

Food-grade ingredients may also be added to the grain or legume product. For instance, during rotary cooking, a flavor may be introduced and/or infused into the grain or legume. Following drying and puffing, the finished cake contains flavors incorporated into the grains or legumes of the cake. This flavor may compliment a topical coating or stand alone as a simple, more naturally-flavored puffed cake. Food-grade flavorings such as sugars, salts, and spices may be incorporated into the cake. The infusion of flavors may also be beneficial as a means of eliminating or masking strong bitter flavors that may develop during puffing of the whole grains and legumes. For example, sugar and barley malt may be used to mask bitter oat flavors. Other flavorings used may include cinnamon powder, Thermarome^{™} (Firmenich) honey flavoring and Durarome^{™} (Firmenich) Basil and Roasted Garlic Flavoring. In one embodiment, sugar is added to the grains and completely infused into the grain. This complete infusion is beneficial to prevent the grains from sticking in the puffing mold. Antioxidants are also more effective in preventing oxidation when they are infused into the grain instead of being dissolved into the outer surface of the grain.

As described herein, the present disclosure provides a method for preparing a puffed whole grain and legume cake using a first and second rotary cooker, resulting in beneficial attributes, while maintaining the structure of the whole grain or legume throughout processing.

### Reference Example 1 (not in accordance with the invention)

Step 1. Dissolve the sugar, malted barley extract, and salt in the water from Table A and then add ingredients in Table A to the rotary cooker.

**Table A**

| Ingredient | %of Formula | Kg per batch (lbs per batch) |
|---|---|---|
| Oats | 85.970 | 39.03 (85.97) |
| Sugar | 3.150 | 1.43 (3.15) |
| Malted barley extract | 1.500 | 0.68 (1.50) |
| Salt | 0.800 | 0.36 (0.80) |
| Water | 8.500 | 3.86 (8.50) |
| Mixed Tocopherol | 0.080 | 0.04 (0.08) |
| Total | 100.000 | 45.40 (100.00) |

Step 2. Cook mixture in preheated rotary cooker (Lauhoff Model LC 91 Serial 9307) for a cycle time of about 30-90 minutes with supply steam pressure at about about 207 MPa to 276 MPa (30-40 psi). Cycle time will include a ramp up of temperature and pressure inside the cooker. Final pressure and temperature should be at least 103 kPa (15 psi) and 121.1 ° C (250° F), respectively, and should be held at these conditions for about 5-25 minutes. This cooking cycle is followed by a 5 minute depressurization, 10 minute purge, and 5 minute depressurization to discharge. Resulting grain mixture should be about 30-38% moisture.

Step 3. Dry grain mixture of Step 2 using Aeroglide Electric Batch oven. Depending on bed depth and beginning moisture, grains can be dried at 76.7° C to 104.4° C(70°-220° F) for 45-120 minutes to reach desired moisture of less than 11 %. Low moisture is needed for safe storage of grains, specifically mold growth prevention. If grains are not going to be stored before puffing, moisture should be reduced to about 15%, but tempering is necessary to allow moisture to equilibrate throughout the batch.

Step 4. If grains have been stored, grains must be soaked or steamed to achieve a moisture level of about 13-17% before popping.

Step 5. Grains are popped into cakes using a Lite Energy Rice Cake Machine containing molds between 2.54 cm and 5.08 cm (1" and 2") in diameter. The machine is set to about 204.4° C to 260° C (about 400°-500° F) on its top and bottom molds. The internal mold pressure is set to about 6.55 MPa (about 950 psi). Bake time can range between 2 s and 5 s to achieve the desired expansion and texture.

### REFERENCE EXAMPLE 2 (not in accordance with the invention)

Method described in Reference Example 1, except using whole grain barley instead of oats.

### REFERENCE EXAMPLE 3 (not in accordance with the invention)

Method described in Reference Example 1, except using whole wheat instead of oats and reducing cook time to 30-60 minutes.

### REFERENCE EXAMPLE 4 (not in accordance with the invention)

Step 1. Steam oats by spraying 35 kPa (5 psi) steam on steel cut oats in a tumbler. Oats are steamed in 4.5 kg (10 lb) batches for 75 s, raising moisture about 3%. Oats start at a moisture ranging from 8-12%.

Step 2. Dissolve added ingredients such as sugar, barley malt, salt, and antioxidants into 82.2° C ( 180° F) water. Amount of water is about 8-10% as part of a formula containing about 80-85% whole grains, and other minor dry ingredients. In this example, the flavors are infused into the grain during the pre-soak step prior to rotary cooking.

Step 3. Mix water slurry mixture with steamed oats and soak, covered for about 30-60 minutes.

Step 4. Cook mixture in preheated rotary cooker (Lauhoff Model LC 91 Serial 9307) for a cycle time of about 20-60 minutes with supply steam pressure at about 206 kPa to 276 kPa (about 30-40 psi). Cycle time will include a ramp up of temperature and pressure inside the cooker. Final pressure and temperature should be at least about 103 kPa (about 15 psi) and 126.7° C (260° F), respectively, and should be held at these conditions for about 5-15 minutes. This cooking cycle is followed by a 5 minute depressurization, 10 minute purge, and 5 minute depressurization to discharge. The resulting grain mixture should be about 30-38% moisture.

Step 5. Dry grain mixture prepared in Steps 1-4 using Aeroglide Electric Batch oven. Depending on bed depth and beginning moisture, grains can be dried at 76.7° C to 104.4° C (170°- 220° F) for 45-120 minutes to reach desired moisture of less than 11%. Low moisture is needed for safe storage of grains, specifically mold growth prevention. If grains are not going to be stored before puffing, moisture should be reduced to about 15%, but tempering is necessary to allow moisture to equilibrate throughout the batch.

Step 6. If grains have been stored, grains must be soaked or steamed to achieve a moisture of about 13-17% before puffing.

Step 7. Grains are popped into cakes using a Lite Energy Rice Cake Machine containing molds between 2.54 cm and 5.08 cm (1" and 2") in diameter. The machine is set to about 204.4° C to 260° C (about 400°-500° F) on top and bottom molds. The internal mold pressure is set to about 6.55 MPa (about 950 psi). Bake time can be varied between 2 s and 5 s to achieve desired expansion and texture.

### EXAMPLE 5 (not in accordance with the invention)

Step 1. Dissolve the sugar and salt in the water in the quantities listed in Table A and add ingredients in Table B to the rotary cooker.

**Table B**

| Ingredient | % of Formula | Kg per batch (lbs per batch) |
|---|---|---|
| Chana Dal beans | 85.57 | 15.540 (34.228) |
| Sugar | 3.45 | 0.63 (1.38) |
| Salt | 0.86 | 0.156 (0.344) |
| Water | 10.000 | 1.82 (4.00) |
| Mixed Tocopheroll | 0.080 | 0.015 (0.032) |
| Citric Acid | 0.040 | 0.007 (0.016) |
| Total | 100.000 | 18.160 (40.000) |

Step 2. Rotate the rotary cooker with ingredients for about 30 seconds before adding steam.

Step 3. Cook mixture prepared in Steps 1-2 in preheated rotary cooker (Lauhoff Model LC 91 Serial 9307) for a cycle time of about 25 minutes with supply steam pressure at about 138kPa (20 psi). Cycle time will include a ramp up of temperature and pressure inside the cooker. Final pressure and temperature should be at least about 41 kPa (about 6 psi) and 107.2° C (225° F), respectively, and should be held at these conditions for about 5-10 minutes. This cooking cycle is followed by a 5 minute depressurization to discharge. The resulting lentil mixture should be about 24% moisture.

Step 4. Dry lentil mixture using Aeroglide Electric Batch oven. Depending on bed depth and beginning moisture, lentils can be dried at 76.7° C to 104.4° C (170°-220° F) for about 40 minutes to reach desired moisture of less than about 14%. Low moisture is needed for safe storage of pre-cooked legumes, specifically mold growth prevention. If the legumes are not going to be stored before popping, moisture should be reduced to about 15%, but tempering is necessary to allow moisture to equilibrate throughout the batch.

Step 5. If the lentils have been stored, they must be soaked or steamed to achieve a moisture of about 13-15 % before puffing.

Step 6. Lentils are popped into cakes using a Lite Energy Rice Cake Machine containing molds between 2.54 cm and 5.08 cm (1" and 2") in diameter. The machine is set to about 204.4° C to 260° C (about 400°-500° F) on top and bottom molds. The internal mold pressure is set to about 6.55 MPa (about 950 psi). Bake time can be varied between 1.0 s and 5.0 s to achieve desired expansion and texture.

## Claims

1. A method for preparing a puffed whole grain and legume cake, said method comprising the steps of:
a) introducing legumes into a rotary cooker;
b) cooking the legumes for a cycle time of 20 to 60 minutes with steam and water in the rotary cooker to reach a target temperature of 115.56 °C (240 °F) to 126.67 °C (260 °F) and a pressure of 68.9 to 137.9 kPa (10 to 20 psi) for 5 to 25 minutes such that the cooked legumes have 20-45% moisture;
c) drying the legumes to 10-17% moisture;
d) introducing at least one whole grain into a second rotary cooker;
e) cooking the whole grain for a cycle time of 30 to 90 minutes with steam and water in the rotary cooker to reach a target temperature of 121.11 °C (250 °F) to 137.78 °C (280 °F) and a pressure of 103.4 to 172.4 kPa (15 to 25 psi) for 15 to 60 minutes such that the cooked whole grain has 20-50% moisture;
f) drying the at least one whole grain to 13-17% moisture;
g) blending the legumes from step c) with the at least one whole grain from step f) to form a grain-legume mixture; and
h) puffing and fusing the grain-legume mixture to form a puffed whole grain and legume cake.

2. The method of claim 1 wherein the legumes are selected from lentils, peas, chickpeas, soybeans, pinto beans, navy beans, black beans and mixtures thereof.

3. The method of claim 2, wherein the legumes are lentils selected from Moong Dal, Urad Dal, Chana Dal, or Masoor and mixtures thereof.

4. The method of any one of claims 1-3, wherein the at least one whole grain is selected from oats, wheat, rice, corn, barley and mixtures thereof.

## Patentansprüche

1. Verfahren zur Herstellung einer gepufften Vollkorn- und Hülsenfrüchtewaffel, wobei das Verfahren die folgenden Schritte umfasst:
a) Einbringen von Hülsenfrüchten in einen Drehgarer;
b) Garen der Hülsenfrüchte während einer Zykluszeit von 20 bis 60 Minuten mit Dampf und Wasser in dem Drehgarer, um eine Zieltemperatur von 115,56°C (240°F) bis 126,67°C (260°F) und einen Druck von 68,9 bis 137,9 kPa (10 bis 20 psi) während 5 bis 25 Minuten zu erreichen, derart dass die gekochten Hülsenfrüchte eine Feuchtigkeit von 20 bis 45 % aufweist;
c) Trocknen der Hülsenfrüchte bis zu einer Feuchtigkeit von 10 bis 17 %;
d) Einbringen des mindestens einen Vollkorns in einen zweiten Drehgarer;
e) Garen des Vollkorns während einer Zykluszeit von 30 bis 90 Minuten mit Dampf und Wasser in dem Drehgarer, um eine Zieltemperatur von 121,11°C (250°F) bis 137,78°C (280°F) und einen Druck von 103,4 bis 172,4 kPa (15 bis 25 psi) während 15 bis 60 Minuten zu erreichen, derart dass das gekochte Vollkorn eine Feuchtigkeit von 20 bis 50 % aufweist;
f) Trocknen des mindestens einen Vollkorns bis zu einer Feuchtigkeit von 13 bis 17 %;
g) Mischen der Hülsenfrüchte aus Schritt c) mit dem mindestens einen Vollkorn aus Schritt f), um ein Korn-Hülsenfrüchte-Gemisch zu bilden; und
h) Puffen und Verschmelzen des Korn-Hülsenfrüchte-Gemischs, um eine gepuffte Vollkorn- und Hülsenfrüchtewaffel zu bilden.

2. Verfahren nach Anspruch 1, wobei die Hülsenfrüchte ausgewählt sind aus Linsen, Erbsen, Kichererbsen, Sojabohnen, Wachtelbohnen, weißen Bohnen, schwarzen Bohnen und Gemischen daraus.

3. Verfahren nach Anspruch 2, wobei die Hülsenfrüchte Linsen sind, die ausgewählt werden aus Moong Dal, Urad Dal, Chana Dal oder Masoor und Gemischen daraus.

4. Verfahren nach einem der Ansprüche 1 bis 3, wobei das mindestens eine Vollkorn ausgewählt ist aus Hafer, Weizen, Reis, Mais, Gerste und Gemischen daraus.

## Revendications

1. Procédé pour préparer un gâteau soufflé de légumineuses et de céréale complète, ledit procédé comprenant les étapes de :
a) introduction de légumineuses dans un cuiseur rotatif ;
b) cuisson des légumineuses à la vapeur et à l'eau pendant un temps de cycle de 20 à 60 minutes dans le cuiseur rotatif pour que soient atteintes une température cible de 115,56°C (240°F) à 126,67°C (260°F) et une pression de 68,9 à 137,9 kPa (10 à 20 psi) pendant 5 à 25 minutes de façon que les légumineuses cuites aient 20 à 45 % d'humidité ;
c) séchage des légumineuses jusqu'à 10 à 17 % d'humidité ;
d) introduction d'au moins une céréale complète dans un deuxième cuiseur rotatif ;
e) cuisson de la céréale complète à la vapeur et à l'eau pendant un temps de cycle de 30 à 90 minutes dans le cuiseur rotatif pour que soient atteintes une température cible de 121,11°C (250°F) à 137,78°C (280°F) et une pression de 103,4 à 172,4 kPa (15 à 25 psi) pendant 15 à 60 minutes de façon que la céréale complète ait 20 à 50 % d'humidité ;
f) séchage de l'au moins une céréale complète jusqu'à 13 à 17 % d'humidité ;
g) mélange des légumineuses de l'étape c) avec l'au moins une céréale complète de l'étape f) pour former un mélange céréale-légumineuses ;
h) soufflage et fusion du mélange de céréale-légumineuses pour former un gâteau soufflé de légumineuses et de céréale complète.

2. Procédé selon la revendication 1, dans lequel les légumineuses sont choisies parmi les lentilles, les pois, les pois chiches, les fèves de soja, les haricots pinto, les petits haricots blancs, les haricots noirs et leurs mélanges.

3. Procédé selon la revendication 2, dans lequel les légumineuses sont des lentilles choisies parmi les Moong Dal, Urad Dal, Chana Dal, Masoor, et leurs mélanges.

4. Procédé selon l'une quelconque des revendications 1 à 3, dans lequel l'au moins une céréale complète est choisie parmi l'avoine, le blé, le riz, le maïs, l'orge et leurs mélanges.
